# EUROPEAN PATENT APPLICATION

(11) **EP 4 471 687 A1**
(43) Date of publication of application: **04.12.2024**
(21) Application number: 22929295.8
(22) Date of filing: 02.03.2022
(51) Int. Cl.: G06Q 10/06

(54) **WORKFLOW EXECUTION METHOD AND SYSTEM, MEDIUM, AND PROGRAM PRODUCT**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN); WENG, Changwei, Nanjing, Jiangsu 211100 (CN); JI, Yukai, Shanghai 201102 (CN)
(74) Representative: Isarpatent
(86) International application number: PCT/CN2022/078875
(87) International publication number: WO 2023/164844

(57) **Abstract**

A workflow execution method and system, a medium, and a program product. The method comprises: analyzing a behavior tree comprising functional block nodes and connection relationships thereof to obtain a workflow representing service operations to be executed by resources in a working unit, wherein the functional block nodes are configured to implement the service operations in the workflow; and deploying the workflow to a runtime of the corresponding working unit, so that the resources in the working unit perform the operations according to the workflow.

## Description

### TECHNICAL FIELD

Embodiments of this application relate to the field of industrial technologies, and in particular, to a workflow execution method and system, a computer-readable storage medium, and a computer program product.

### BACKGROUND

A workflow may be simply defined as a description of a series of operation processes. The workflow is widely applied to fields such as an automation system, artificial intelligence, robotics, and the like. For example, a workflow of a product sorting line in the automation system may be simply described as starting, taking a photo, classification, and moving a product to a target position. A model deployment workflow in the field of artificial intelligence may be described as data collection, data annotation, model training, and model deployment.

However, currently, there are only text descriptions for these workflows. If a user intends to execute such a workflow, a text description needs to be followed, and a plurality of engineering tools may be used. However, these tools are almost unrelated to each other and provide completely different user operation behaviors. This is a challenge to the user, and due to a long development cycle, costs are greatly increased, efficiency is reduced, and flexibility is limited. For example, in the field of artificial intelligence, a user needs to use a tool for data collection, manually perform or use another tool for data annotation, and write a python script for model training, and further needs a deployment tool for deployment.

Therefore, those skilled in the art are further committed to searching other workflow solutions.

### SUMMARY

Embodiments of this application provide a workflow execution method and system, a computer-readable storage medium, and a computer program product, to quickly and easily build a workflow.

According to a first aspect, a workflow execution method is provided, including: analyzing a behavior tree including function block nodes and connection relationships thereof to obtain a workflow representing service operations to be performed by resources in a workcell, where the function block nodes are configured to implement the service operations in the workflow; and deploying the workflow to a runtime of the corresponding workcell, so that the resources in the workcell perform the operations according to the workflow.

According to a second aspect, a workflow execution method is provided, including: receiving, by a runtime, a workflow representing service operations to be performed by resources in a workcell, where the workflow is obtained by analyzing a behavior tree including function block nodes and connection relationships thereof; and converting, by the runtime, the workflow into an executable format file, and executing the executable format file to schedule a corresponding resource to perform a corresponding service operation.

According to a third aspect, a workflow execution system is provided, including: an analysis module, configured to analyze a behavior tree to obtain a workflow representing service operations to be performed by resources in a workcell, where the function block nodes are configured to implement the service operations in the workflow; and a deployment module, configured to deploy a workflow to a runtime of the corresponding workcell, so that the resources in the workcell perform the service operations according to the workflow.

According to a fourth aspect, a workflow execution system is provided, including: a runtime, configured to receive a workflow representing service operations to be performed by resources in a workcell, where the workflow is obtained by analyzing a behavior tree including function block nodes and connection relationships thereof; and converting the workflow into an executable format file, and executing the executable format file to schedule a corresponding resource to perform a corresponding service operation.

According to a fifth aspect, another workflow execution system is provided, including: at least one memory, configured to store computer-readable code; and at least one processor, configured to invoke the computer-readable code to perform the steps of the method according to the first aspect or the second aspect.

According to a sixth aspect, an IT domain and OT domain convergence system is provided, including an IT device and the workflow execution system according to any one of the foregoing implementations. The workflow is an OT domain workflow; the workcell is a workcell in an OT domain; and the resource is an OT resource; and the workflow execution system further includes: an OT domain microservice interface, configured to: when the IT device calls a microservice corresponding to the workflow, trigger the workflow execution system to execute the OT domain workflow.

According to a seventh aspect, a computer-readable storage medium is provided. The computer-readable storage medium stores computer instructions. The computer instructions, when executed by a processor, enable the processor to perform the steps of the method according to the first aspect or the second aspect.

According to an eighth aspect, a computer program product is provided. The computer program product is tangibly stored in a computer-readable medium and includes computer-executable instructions. The computer-executable instructions, when executed, enable at least one processor to perform the steps of the method according to the first aspect or the second aspect.

In embodiments of this application, operations that can be performed by corresponding types of resources are encapsulated into corresponding function block nodes. Therefore, a behavior tree may be used to represent an operation process of a workflow. The behavior tree is analyzed, and the workflow corresponding to the behavior tree is deployed to a runtime of the corresponding workcell, so that the resources in the workcell perform the operations according to the workflow. In this way, an objective of controlling the operations of the workcell based on the workflow is achieved. Due to reusability of the nodes, decoupling of a specific service from an engineering platform is implemented. In addition, the nodes are organized in a form of the behavior tree, so that an intuitive workflow operation process from development to implementation can be generated, thereby reducing complexity of workflow building and execution, and implementing quick and convenient workflow building and execution.

For any one of the foregoing aspects, optionally, the workflow is an OT domain workflow; the workcell is a workcell in an OT domain; and the device is an OT device. In this way, workflow execution in the OT domain is implemented.

For any one of the foregoing aspects, optionally, a microservice is generated based on the OT domain workflow and a corresponding microservice interface is set in a runtime, so that an IT device in an IT domain triggers, through the microservice interface when calling the microservice, a runtime of a main controller of the workcell to execute the OT domain workflow. In this way, the IT device may call the microservice generated based on the OT domain workflow, to trigger execution of the OT workflow, so that convergence of an IT domain and the OT domain is implemented.

### BRIEF DESCRIPTION OF THE DRAWINGS

FIG. 1A is an example flowchart of a workflow building method according to embodiments of this application.
FIG. 1B is an example diagram of a resource knowledge graph according to an example of this application.
FIG. 1C is an example diagram of associating each resource node with a function block node according to an example of this application.
FIG. 1D is a diagram of a dynamic resource according to an example of this application.
FIG. 1E is an example flowchart of another workflow building method according to embodiments of this application.
FIG. 1F is an example flowchart of a workflow execution method according to an embodiment of this application.
FIG. 1G is an example flowchart of another workflow execution method according to an embodiment of this application.
FIG. 2A is a diagram of a created behavior tree according to an example of this application.
FIG. 2B to FIG. 2S are respective diagrams of some of behavior trees created according to an example of this application.
FIG. 2T is an example of constructing a behavior tree based on a function block node of a function block type diagram according to an example of this application.
FIG. 2U to FIG. 2X are each a diagram of hiding or displaying a data input port or a data output port according to an example of this application.
FIG. 2Y is a diagram of separately adding a data block in four function block nodes in a behavior tree and displaying corresponding data in each data block according to an example of this application.
FIG. 3A is a diagram of an example of a structure of a workflow building system according to an embodiment of this application.
FIG. 3B is a diagram of an example of a structure of a workflow execution system according to an embodiment of this application.
FIG. 3C is a diagram of a structure of a workflow execution system according to an example of this application.
FIG. 4A to FIG. 4D are diagrams of workflow building systems according to embodiments of this application.
FIG. 4E is a diagram of an application scenario in the field of industrial automation.
FIG. 5 is a diagram of hardware implementation of a workflow building system according to an embodiment of this application.

### REFERENCE NUMERALS LIST

S11A to S12A, S11B to S12B: Steps of a workflow building method
S13 to S14, S15 to S16: Steps of a workflow execution method
201: Function block name
202: Function block header
203: Link input port
204: Link output port
205: Link connection
206: Sensitive area
207: Instruction label
208: Input data chunk
209: Output data chunk
210: Data input port
211: Data output port
212: Data connection
213: Function block icon
214: Function block body
215: Data block label
216: Data block body
217: Monitor link
110: Node library
120: Graphical interface module
130: Editing and processing module
140: Analysis and deployment module
141: Analysis module
142: Deployment module
150: Resource library
100: OT domain low-code development platform
10: OT domain low-code development tool
20: OT domain microservice generator
30: Runtime in a main controller of a workcell
31: Format conversion module
32: Code executor
33: Scheduler
331: Builder
332: NLA executor
333: Dynamic resource injector
34: Execution engine module
341: Interpreter
342: Compiler
343: Anther interpreter adapter
35: Debug module
36: Open interface
37: Community-driven openness
38: Text-driven element
39: Microservice interface
310: Function block node management module
311: Function block node aggregation
312: Universal API interface
313: Data monitoring module
40: Microservice
50: Third-party apparatus
200: Knowledge middle platform
300: IT domain code development platform
301: IT domain code development tool
51: At least one memory
52: At least one processor
53: At least one display
54: Bus

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of embodiments of this application. Various processes or components may be omitted, replaced, or added in each example according to requirements. For example, the described method may be performed according to a sequence different from the sequence described herein, and various steps may be added, omitted, or combined. In addition, features described in some examples may also be combined in other examples.

As used in this specification, the term "include" and variants thereof represent open terms, and mean "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes in detail embodiments of this application with reference to the accompanying drawings.

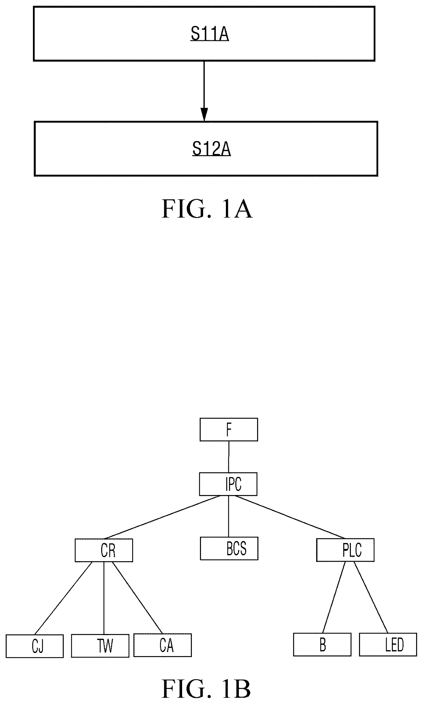

FIG. 1A is an example flowchart of a workflow building method according to an embodiment of this application. As shown in FIG. 1A, the method may include the following steps:
Step S11A: Receive an operation of constructing a behavior tree performed by a user on a graphical user interface based on a preset behavior tree node.

In this embodiment, one behavior tree is used for representing one workflow, and the workflow is used for defining an operation to be performed by one workcell. For example, the workflow may represent a distributed process in the workcell. During specific implementation, the workflow herein may be further subdivided into a main workflow and a subworkflow. The main workflow is used to limit start, end, and other flow control that triggers an entire workcell process. The main workflow is an entrance to the entire process and is linked to at least one subworkflow. The subworkflow is generally a major workflow, and each subworkflow corresponds to one sub-process, used to implement a specific service operation.

The workcell (Workcell) may be a combination of resources such as systems or devices that can implement a relatively complete and independent control process and operation. In this embodiment, the workcell is used as the basic unit to build the workflow. This is more consistent with a characteristic of industrial control, can improve an integration degree of development, and reduce complexity of development. For example, the field of industrial technologies is used as an example, the workcell may be defined according to an actual industrial scenario. For example, one work procedure may be defined as corresponding to one workcell, one workstation in the work procedure may be defined as one workcell, or one work position in the workstation may be defined as corresponding to one workcell, and so on. Different workcells have different technological processes.

In this embodiment, the behavior tree node may include: a flow control node and a function block node. which are respectively described in detail in the following.

### I. Flow control node

The flow control node is configured to implement logic control in a workflow, and is usually independent of a specific service operation in the workcell. A user may build various types of workflows according to requirements of the user through the flow control node.

During specific implementation, the flow control node may include: a main control node, a logical control node, a condition node, and the like. Alternatively, the flow control node may further include: one or any combination of a main control node, a logical control node, and a condition node. The nodes are separately described in a simple manner below.

### 1. Main control node

The main control node may include: some or all of a start (Start) node, an end (End) node, a goto (Goto) node, an anchor (Anchor) node, a stop (Stop) node, and an abort (Abort) node.

The main control node in this embodiment is not a standard behavior tree element. However, in this embodiment, the main control node may be configured to control a main process of the workflow, and may be linked to a state machine of the workflow. The start node is mandatory. In addition, one of the end node or the goto node may also be mandatory. The main control node is mainly configured to define start and end of the workflow. In addition, another element node may control the state machine (for example, abort and stop) or annotate a key process step (for example, the anchor node) that may be jumped to.

### 2. Logical control node

The logical control node may include: some or all of a sequence (Se, Sequence) node, a reactive sequence (RSe, Reactive Sequence) node, a parallel (Pa, Parallel) node, an in-process quality control (IPQ, In-Process QC) node, a priority (Pr, Priority (Fallback)) node, a reactive priority (RPr, Reactive Priority (Fallback)) node, an if-then-else (ITE, If-Then-Else) node, and a multi-branch selection (Sw, Switch) node.

The logical control node may define how to execute a branch in a behavior tree, and is configured to implement branch logic control and the like in the workflow. The nodes thereof are simply described as follows:
(1) Sequence node: The node may have a plurality of child nodes, and routing to the child nodes is sequentially triggered according to a sequence in the workflow.
(2) Reactive sequence node: The node has a function the same as that of the sequence node, but continuously checks a trigger condition.
(3) Parallel node: The node may have one to a plurality of child nodes, started sequentially from top to bottom, and execute all the child nodes simultaneously in a plurality of processes or a plurality of threads.
(4) In-process quality control node: A quality engineer performs quality inspection on some process steps. An exception processing process is performed if the inspection fails, and a next step continues to be performed if the inspection succeeds.
(5) Priority node: Sub-branches are sequentially executed according to priorities. A next sub-branch is executed if execution of a previous sub-branch fails, until execution of any one sub-branch succeeds.
(6) Reactive priority node: The node has a function the same as that of the priority node, but continuously checks a trigger condition.
(7) If-then-else node: A trigger expression is checked. A true branch is executed if a result is true, and a false branch is executed if a result is false.
(8) Multi-branch selection node: A trigger expression is checked. Different branches are executed according to different conditions, and a default branch is executed if none of the conditions is met.

Generally, the sequence node and the parallel node may drive most of logic in the workflow.

### 3. Condition (C, Condition) node

The condition node is generally a basic logic element that checks an expression in the behavior tree, and is configured to perform condition determining and return a determining result. The condition node returns success or failure depending on whether a condition is met. The condition node never returns a running state.

In addition, in another implementation, the condition node may alternatively be included in the function block node. Alternatively, the condition node may be used as a single type of node.

### II. Function block (FB, Function Block) node

The function block node is configured to execute a command, to implement a service operation in a workflow. Generally, success is returned if the operation is correctly completed. Failure is returned if the operation fails. Running is returned when the operation is performed.

In this embodiment, the function block node includes a logical node, and may further include some specific types of function block nodes. For example, the function block node may include some or all of a manual (Manual) node, a dynamic (Dynamic) node, a delay (Delay) node, and an idle (Empty (idle)) node. The dynamic node is configured to dynamically inject a node instance in a runtime. The manual node represents a manual step. Stopping is performed at a current node before a confirmation signal is obtained, and exiting is performed after the confirmation signal is obtained. The delay node represents that exiting from the current node is performed after specified time delays. The idle node represents that no operation is performed, and a placeholder may be replaced by any function block node. Each logical node may correspond to one operation template. Each operation template predefines an operation that can be performed by at least one type of resource (for example, a device type such as a collaborative robot type or a PLC type). For example, the operation may include: an action, a method, or a skill.

During specific implementation, each operation template may include an interface part and an implementation part. The implementation part may be an application program (for example, a containerized application program), including function code and an execution dependency item. The application program may run independently and be exposed to the outside through a specific network communication interface. The interface part may be a logical node presented as a graphical element, that is, like other behavior tree nodes, the logical node may be dragged and dropped, connected, and configured on a graphical user interface. During specific implementation, each logical node may have a parameter panel, configured to configure parameters of the logical node, for example, input and output parameters. Certainly, these input and output parameters may alternatively be preset with default values.

Each logical node may be configured and executed separately. When a logical node in a behavior tree is executed, an input configured by a user for the logical node is read and transmitted to the implementation part, that is, a corresponding application program, of the operation template. After a specific operation such as model conversion is completed, an operation result such as a converted model is converted back to an output of the logical node.

In this embodiment, the interface part and the implementation part of each operation template may be separately stored. For example, a node library may store only the interface part, namely, the logical node, and the implementation part thereof may be stored in a node service module. In this embodiment, the node service module may be referred to as runtime (Runtime). The node service module may be located in a server or may be locally located.

Optionally, the logical node follows an information model of a runtime interaction with the main controller. In this way, standardization of communication between a workflow and main controllers of various resources is implemented.

In addition, it is considered that a service operation corresponding to a function block node may be performed by different entities, for example, a specific physical device, a person, or another virtualized term resource. For ease of description, the physical device, the person, the virtualized term resource, and the like are collectively referred to as resources in this specification. These resources are generally resources that can perform a workflow in the field as operation entities.

During specific implementation, a resource used as an operation execution entity may be used as an ordinary configuration parameter of the function block node, to configure a corresponding resource for a required function block node during creation of the behavior tree. Alternatively, a resource used as an operation execution entity is configured for the function block node when the function block node is created. In this way, there is no need to configure a resource for a required function block node during creation of the behavior tree.

Alternatively, to facilitate management of the resources, these resources may alternatively be represented in a form of resource nodes, and these resource nodes may be stored in a form of a resource knowledge graph. The resource knowledge graph includes: the resource nodes, and a connection line representing a relationship between the resource nodes. For example, FIG. 1B is an example diagram of a resource knowledge graph according to an example. As shown in FIG. 1B, the resource knowledge graph is a factory resource knowledge graph, that is, describes a real system configuration of a factory. The factory (F, Factory) node has an industrial personal computer (IPC) node, and the industrial personal computer (IPC) node has a collaborative robot (CR, Cooperative Robot) node, a PLC node, and a bar code scanner (BCS, Bar Code Scanner) node. The collaborative robot (CR, Cooperative Robot) node has a clamping jaw (CJ, Clamping Jaw) node, a torque wrench (TW, Torque Wrench) node, and a camera (CA, Camera) node. The PLC node has a button (B, Button) node and an LED warning light node. Certainly, in some applications, there may be more than one device of a specific type of device such as a collaborative robot. In this case, each device of the specific type of device may be distinguished by a reference number, a model number, or the like. Details are not described herein.

For each function block node, the function block node may be instantiated as an operation of a corresponding resource by being associating with a resource node. For example, a specific logical node may be instantiated as an operation of a corresponding device by being associated with a device resource node. During specific implementation, a resource header may be set for the function block node, and a resource associated with the function block node is displayed in the resource header.

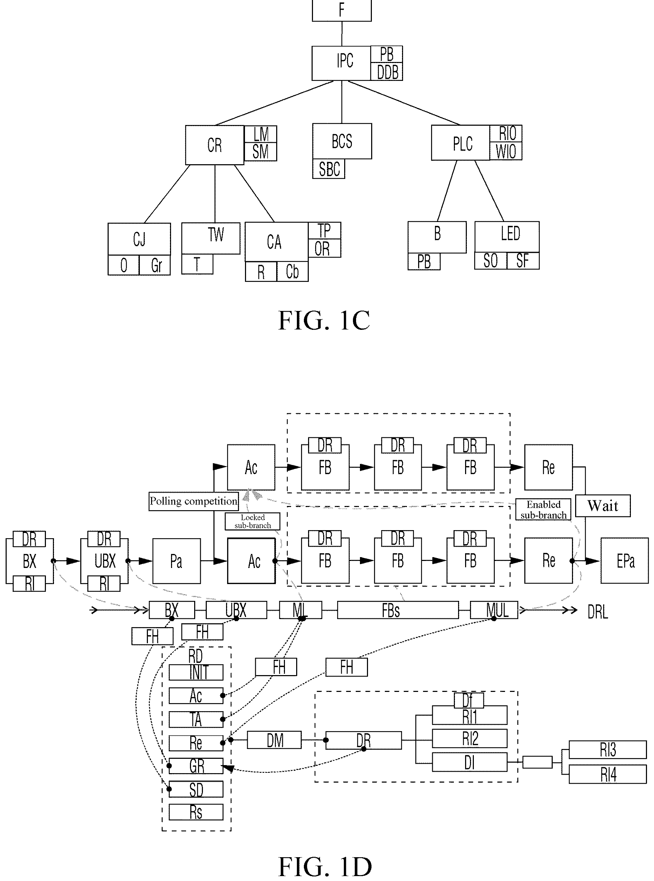

A specific association process may be implemented in a plurality of different implementations. For example, each resource node may be pre-associated with a corresponding function block node. In this way, during creation of the behavior tree, a function block node associated with a corresponding resource may be directly pulled, and there is no need to temporarily perform configuration. For example, FIG. 1C is an example diagram of associating each resource node with a function block node according to an example. As shown in FIG. 1C, for the resources shown in the resource knowledge graph shown in FIG. 1B, corresponding function block nodes are respectively associated. A press button (PB, Press Button) node and a display dialog box on screen (DDB, Display Dialog Box on Screen) node are associated with the industrial personal computer (IPC) node. A linear move (LM, Linear Move) node and a shutdown mobile (SM, Shutdown Mobile) node are associated with the collaborative robot (CR, Cooperative Robot) node. A read I/O (RIO, Read I/O) node and a write I/O (WIO, Write I/O) node are associated with the PLC node. A scan bar code (SBC, Scan Bar Code) node is associated with the bar code scanner (BCS, Bar Code Scanner) node. An open (O, Open) node and a grab (Gr, Grab) node are associated with the clamping jaw (CJ, Clamping Jaw) node. A twist (T, Twist) node is associated with the torque wrench (TW, Torque Wrench) node. A register (R, Register) node, a calibration (Cb, Calibration) node, a take photo (TP, Take Photo) node, and an object recognition (OR, Object Recognition) node are associated with the camera (CA, Camera) node. A press button (PB, Press Button) node is associated with the button (B, Button) node. A switch on (SO, Switch On) node and a switch off (SF, Switch Off) node are associated with the LED warning light node.

Alternatively, a function block node may not be pre-associated with a resource node, but a required function block node may be associated with a corresponding resource node during creation of the behavior tree.

Alternatively, there may be both a function block node (which may be referred to as a dedicated function block node) with which a resource node is pre-associated and a function block node (which may be referred to as a general-purpose function block node) with which a resource node is not associated. Although a general-purpose function block node has no associated field resource, analog simulation of a workflow corresponding to a behavior tree including the function block node is not affected. For example, it is possible that purchasing has not been performed by a specific collaborative robot. To verify implementability, simulation may be performed by using a corresponding general-purpose function block node in advance. Purchasing may be started when it is determined that implementability exists.

In addition, it is considered that, in some applications, resources for performing service operations of some function block nodes may be unfixed. For example, for human resources, there may be different workers working at different time points, or there may be a staff-based change, for example, a change of workstations, a change of positions, resignation of a person, or entry of a person. For another example, for device resources such as a robot, a position of the robot may change, a robot may be eliminated or added, or the like. Therefore, in the embodiments, a type of dynamic resource (Dynamic Resource, DR), which is a specific type of resource, may be further set.

FIG. 1D is a diagram of a dynamic resource according to an example of the present invention. As shown in FIG. 1D, the dynamic resource may be a placeholder for references to a plurality of resource instances (Resource Instance) RI1 and RI2 of a same type. The plurality of resource instances may be represented in a form of a resource tree as shown in a lower right corner of FIG. 1D, and one resource instance may be set as a default resource instance (Df). For example, RI1 is set as the default resource instance. Further, to enable new resource instances to be expanded for the dynamic resource, in this embodiment, a dynamic injection (Dynamic Injection, DI) node for adding the new resource instances may be further configured for the dynamic resource, so that a runtime (which is referred to below) may inject the new resource instances, such as RI3 and RI4, for the dynamic resource according to field resource data.

During specific implementation, the dynamic resource may have a resource description. As shown in a lower left corner of FIG. 1D, there are placeholders of various method steps (also referred to as a domain method (Domain Method, DM)) related to guiding instantiation of the dynamic resource in the resource description (Resource Description, RD). In this embodiment, the various method steps related to guiding instantiation of the dynamic resource may include:
default value setting (Set Default, SD), used for indicating to determine an available resource instance in the plurality of resource instances of the dynamic resource according to the field resource data, and determine a default resource instance;
resource specifying (Get Resource, GR), used for indicating to specify a resource instance for the dynamic resource according to the field resource data;
positive resource acquisition (Acquire, Ac), used for indicating to lock, when a plurality of branches in a parallel workflow simultaneously use a same dynamic resource, the dynamic resource for a current branch by triggering a positive resource acquisition message and when a response is obtained, to ensure that other branches stop;
try resource acquisition (Try Acquire, TA), used for indicating to lock, when a plurality of branches in a parallel workflow simultaneously use a same dynamic resource, the dynamic resource for a current branch by triggering a try resource acquisition message and regardless of whether a response is obtained, without considering whether other branches stop, where
the positive resource acquisition (Acquire, Ac) and the try resource acquisition (Try Acquire, TA) are two different resource acquisition messages; and
resource release (Release, Re), used for indicating to release, after execution of a current branch ends, the dynamic resource to other branches by triggering resource release.

In addition, the method may further include: device initialization (Init, INIT) and device reset (Reset, Rs).

A placeholder of each method step is connected to a function block node implementing the method step. For example, the placeholder of each method step may be connected to, by using a hook function (for example, a function block hook (FB Hook, FH)), a function block node implementing the method step. All related function block nodes jointly generate a corresponding dynamic resource flow (Dynamic Resource Flow, DRF), as shown in the middle of FIG. ID. The dynamic resource flow may be presented in a form of a behavior subtree on a graphical user interface, as shown in an upper part of FIG. 1D. When constructing the behavior tree, the dynamic resource (DR) only needs to be bound for function block nodes that need to perform corresponding service operations by using the dynamic resource, for example, three function block (FB) nodes within dashed boxes DB1 and DB2 in two branches executed in parallel (Parallel, Pa) in the middle of the upper part of FIG. 1D, and then a dynamic resource flow intrinsic to the dynamic resource is automatically added to a corresponding position. In FIG. 1D, EPa represents end parallel (End Parallel).

In this embodiment, the default value setting (Set Default, SD) is connected to a boxing (Boxing, BX) function block (Function Block, FB), the resource specifying (Get Resource, GR) is connected to an unboxing (Unboxing, UBX) function block, the positive resource acquisition (Acquire, Ac) and the try resource acquisition (Try Acquire, TA) are connected to a mutex lock (Mutex Lock, ML) function block, and the resource release (Release, Re) is connected to a mutex unlock (Mutex Unlock, MUL) function block.

The boxing function block is configured to initialize the dynamic resource, including: determining an available resource instance in the plurality of resource instances of the dynamic resource according to the field resource data, and determining a default resource instance. For example, in an example, it is assumed that three available resource instances are determined, and a preset condition that a most recently located resource instance is preset to be used as a current resource instance that executes a function block node to which the dynamic resource is bound. In this case, a runtime searches for a resource instance satisfying the preset condition from the three available resource instances, and determines the resource instance satisfying the preset condition as the current resource instance. If there is no resource instance satisfying the preset condition, a determined default resource instance may be used as the current resource instance.

The mutex lock function block is configured to lock, when a plurality of branches in a parallel workflow simultaneously use a same dynamic resource, the dynamic resource for a current branch by triggering a resource acquisition message, where each of the branches includes at least one function block node, to be specific, at least one function block node to which the dynamic resource is bound when the behavior tree is constructed. The mutex unlock function block is configured to release the dynamic resource to other branches after execution of the current branch ends. The other branches trigger a resource acquisition message in a polling competition (Polling Competitor) manner to lock the dynamic resource for a current branch when the dynamic resource is released. For example, it is assumed that a preset condition is not set for an available resource instance. In this case, each resource instance may trigger a resource acquisition message to lock the dynamic resource, to acquire qualification for executing a function block node bound to the dynamic resource. For example, it is assumed that two branches in the upper part of FIG. 1D separately represent that a service operation of a same function block node is performed by two workers in a same dynamic resource. In this case, the two persons may ensure, by triggering a resource acquisition message, that the two persons currently perform a service operation of a function block node within a dashed box. It is assumed that a worker in a lower branch acquires qualification for performing the service operation of the function block node within the dashed box (in other words, the worker in the lower branch becomes a current resource instance of the dynamic resource). In this case, a worker in an upper branch can acquire qualification for performing the operation only after the worker in the lower branch completes performing the operation.

The unboxing function block is configured to specify a resource instance for the dynamic resource according to the field resource data. During actual application, the unboxing function block is not required in the dynamic resource flow. Unless otherwise required, a specific dynamic resource is specified to perform a service operation of a function block node to which the dynamic resource is bound.

In addition, this embodiment may further include the following decorator nodes:

### III. Decorator node

The decorator node is mainly configured to decorate a function block node driven by a logic control node, for example, may be configured to determine whether a branch or even a single node in a behavior tree may be executed; and may include: some or all of a repeat (Rp, Repeat) node, a retry (Rt, Retry) node, a one-shot (OS, One-Shot) node, a timeout (TO, Timeout) node, a timer (Tm, Timer) node, an inverter (Iv, Inverter) node, a force run (FR, Force Run) node, a force OK (FO, Force OK) node, a force failed (FF, Force Failed) node, and a guard (G, Guard) node. The following briefly describes some decorator nodes thereof:
(1) Inverter node: The node may have one child node, and is configured to invert the child node. Success is returned if the child node fails. Failure is returned if the child node succeeds.
(2) Force OK node: The node may have one child node (for example, a function block node). The node always returns success regardless of whether the child node succeeds.
(3) Force failed node: The node may have one child node (for example, a function block node). The node always returns failure regardless of whether the child node succeeds.
(4) Repeat node: The node may have one child node (for example, a function block node), and may repeatedly execute the child node thereof for a fixed quantity of times.
(5) Retry node: The node may have one child node (for example, a function block node), and may trigger the child node thereof for a maximum of N times. If the child node thereof returns failure, retrying is performed and a quantity of times is reduced by one. Success is returned when a quantity of retrying times is zero. If the child node returns success, the loop is interrupted, and success is also returned. N is a positive integer.
(6) One-shot node: The node may have one child node, and represents that the child node thereof is executed only once in a workflow, and is not executed before the workflow is restarted.
(7) Timeout node: The node may have one child node, is configured to time execution time of the child node (for example, a function block node) thereof, and exits from the execution (even if execution is not completed) after specified time expires.
(8) Timer node: The node may have one child node, and executes the child node (for example, a function block node) thereof after reaching specified time is implemented.
(9) Force run node: The node may have one child node, and forces a return to a running state regardless of whether execution of the child node (for example, a function block node) is completed.
(10) Guard node: The node may have at least one child node, and is configured to guard statuses of all child nodes thereof. When execution of any child node has an error, the error is reported. Normality is returned only when all child nodes are normal.

In another implementation, the decorator node may alternatively be included in a flow control node. To be specific, the flow control node may include: all or some of a main control node, a logical control node, and a decorator node.

In this embodiment, behavior tree nodes may be listed in forms of icons on a graphical user interface. A user may determine, by selecting and dragging an icon to add the icon to a canvas, a node required to create a workflow. Further, necessary parameter configuration, such as resource configuration and/or input/output parameter configuration, may be further performed on the node. If there is more than one operation to be performed by a workcell, to be specific, there is more than one operation defined in a required workflow, a behavior tree corresponding to the workflow may include a plurality of function block nodes. According to an order of and an interrelationship between the operations, a corresponding flow control node may be set, and a behavior tree corresponding to the workflow is finally generated by making a corresponding discharge connection to a dragged node. That is, the behavior tree construction operation includes a behavior tree node addition and connection operation. Further, an operation of associating an added function block node with a resource may be further included. In addition, the following may be further included: a configuration operation on input and output parameters of the behavior tree node.

Step S12A: Generate, in response to a behavior tree construction operation, a behavior tree corresponding to a workflow. Some or all of function block nodes in the behavior tree may be associated with resources for performing corresponding service operations.

Generally, for a workflow that needs to be implemented by a field resource, all function block nodes in the behavior tree need to be associated with resources for performing corresponding service operations. For an action flow that temporarily does not need to be implemented by a field resource, for example, a workflow for performing analog simulation, it is not necessary that all function block nodes be associated with resources for performing corresponding service operations. For example, it is possible that a specific collaborative robot has not been purchased. To verify implementability, simulation may be performed in advance by using a corresponding general-purpose function block node. Purchasing may be started when it is determined that implementability exists.

In this embodiment, in response to the behavior tree construction operation, the behavior tree nodes may be instantiated, and a connection relationship between the instantiated behavior tree nodes is established. Some or all of the instantiated function block nodes are associated with resources for performing corresponding service operations. This step is performed, so that the added function block node may be instantiated as an operation of a corresponding resource. Then, the behavior tree corresponding to the workflow is generated based on the connection relationship between the instantiated behavior tree nodes.

During specific implementation, the foregoing behavior tree nodes may be stored in a node library. In addition, for a similar application scenario, to avoid wastes of human power, time, and the like caused by repeated construction of behavior trees, a behavior tree (or an uninstantiated behavior tree framework) that is of a corresponding workflow or a corresponding subworkflow and that is already constructed by a user and preferably debugged or successfully run is stored as a workflow node or a subworkflow node. Correspondingly, the node library may further include a workflow (WF, WorkFlow) node and a subworkflow (SWF, SubWorkFlow) node. When the user needs to construct a similar behavior tree or construct a behavior tree including the workflow or the subworkflow, a corresponding workflow node or subworkflow node may be selected and necessary configuration may be performed thereon to obtain a behavior tree for implementing a required workflow.

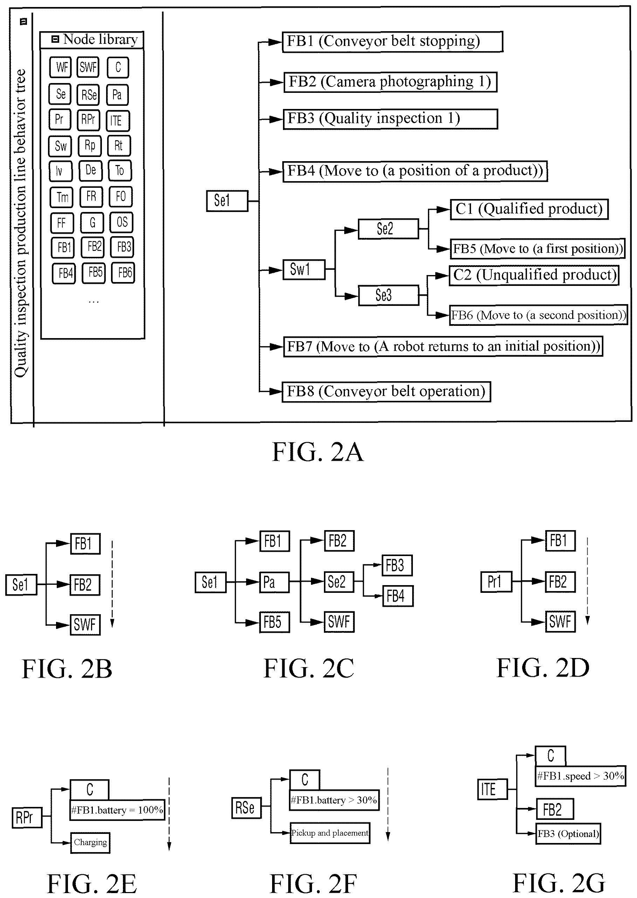

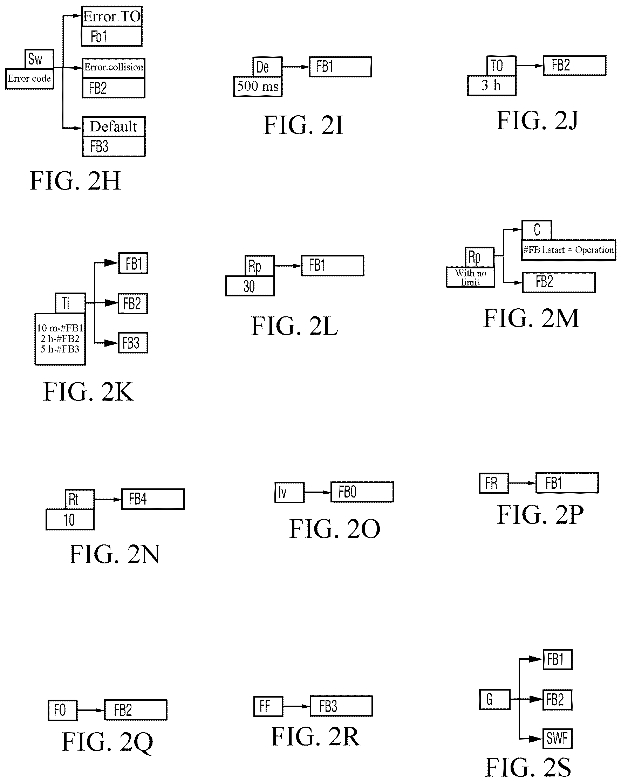

FIG. 2A is a diagram of constructing a behavior tree of a workcell of a quality inspection production line according to an example. FIG. 2B to FIG. 2S are respective diagrams of some of behavior trees constructed according to an example. A direction of an arrow represents an execution order of corresponding nodes.

In the foregoing process of constructing the behavior tree representing the workflow, the function block node may be understood as being presented in a form of a label diagram, and construction of such a behavior tree based on a function block label diagram requires participation of a flow control node and even a decorator node. In addition, an embodiment of the present invention further provides a method for constructing a behavior tree based on a function block type diagram. In the method, a function block node is presented in a form of a type diagram. During actual application, these two behavior tree construction methods may coexist, and when behavior tree construction is performed in one of the manners, construction is synchronously performed in the other manner. For example, when two function block nodes are sequentially connected based on a function block type diagram, when a behavior tree based on a function block label diagram is synchronously constructed, a sequence node is automatically added, and the two function block nodes are added from top to bottom for the sequence node.

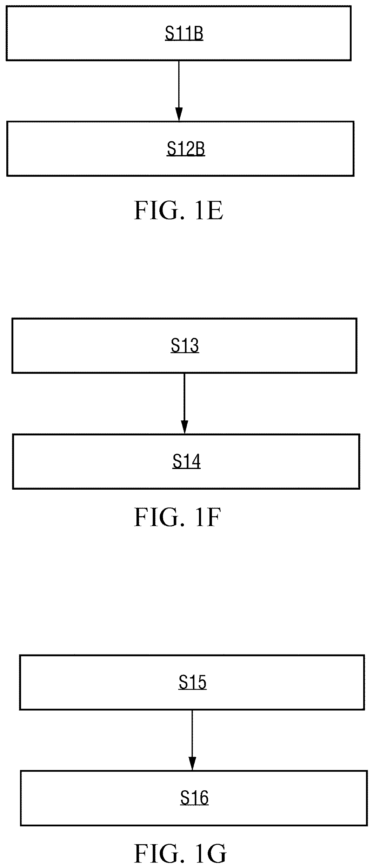

FIG. 1E is an example flowchart of another workflow execution method according to an embodiment of this application. As shown in FIG. 1E, the method may include the following steps:

Step S11B: Receive a function block node addition and connection operation performed by a user on a graphical user interface based on a function block type diagram. In this application, the type diagram and a label diagram may be understood as two presentations of a same function block node, and functions thereof are both used for implementing a corresponding service operation.

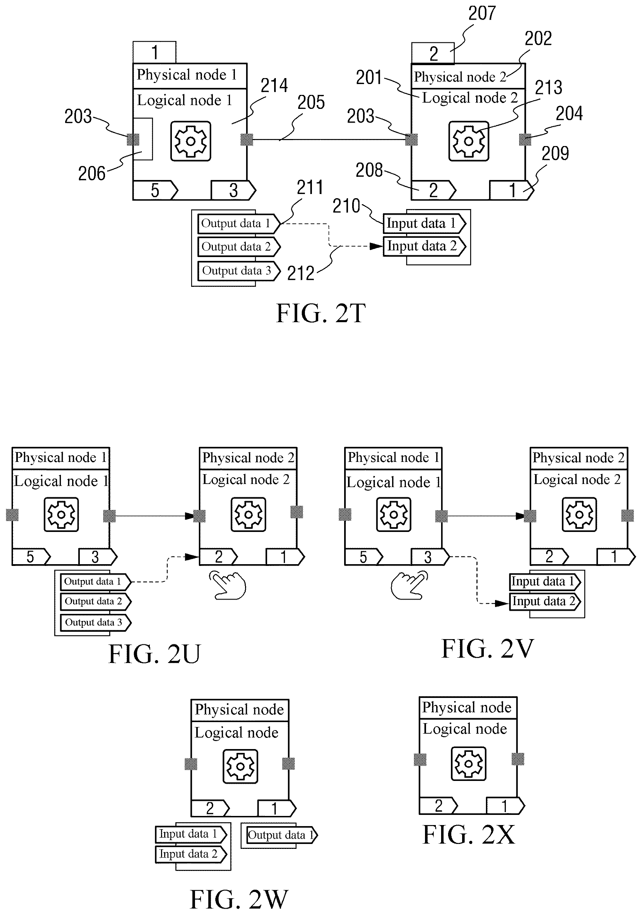

FIG. 2T is an example of constructing a behavior tree by using a function block node based on a function block type diagram according to an example. In this example, two function block nodes FB1 and FB2 are shown. As shown in FIG. 2T, the function block type diagram may include the following:
(1) Function block name 201 used for indicating a type of a service operation, for example, screw fastening, image collection, video recording, visual guidance, and the like. During specific implementation, when a function block node is dragged from a node library to a canvas, a default function block name is generated by using a default name defined by a function block plus an instance number. In FIG. 2U, logical nodes in the function block node are used as an example, and names are represented by using a "logical node 1" and a "logical node 2". The function block name is editable, but should be unique in a current global workflow.
(2) Function block header 202 used for indicating a resource for performing a service operation, where for example, a resource for performing screw fastening is a torque wrench, a resource for performing image collection is a monitor, a resource for performing video recording is a monitor, a resource for performing a visual guide is a camera, and so on. Generally, the function block header 202 of the logical node is usually a physical resource, for example, a "physical node 1" and a "physical node 2" shown in FIG. 2U. As described above, the resource indicated by the function block header 202 may be pre-associated, or association with a corresponding resource may be completed through resource configuration after the function block node is added. In addition, the resource indicated by the function block header 202 may alternatively be a dynamic resource.
(3) Link input port 203 and link output port 204 that are configured to trigger a link connection, where in this embodiment, the function block node connection operation may include: a connection operation between the link output port 204 and the link input port 203 that are between the two function block nodes FB1 and FB2. A link connection 205 is established between the two function block nodes FB1 and FB2 through the connection operation. The link connection 205 in this example is a unidirectional connection used for indicating a running process of a workflow, for example, may indicate an execution order of two function block nodes, to be specific, the left function block node FB1 is executed first and then the right function block node FB2 is executed.

During specific implementation, to avoid a click error and improve sensitivity of connecting a function block node, a sensitive area 206, referred to as a first sensitive area herein, exists within a specified range of the link input port 203, and is configured to locate a connection endpoint on the link input port 203 when a click and connection operation of a user are received within the first sensitive area. Similarly, a sensitive area (not shown in the figure), referred to as a second sensitive area herein, may also exist within a specified range of the link output port 204, and is configured to locate a connection endpoint on the link output port 204 when a click and connection operation of a user are received within the second sensitive area.

In addition, in this embodiment, in response to the connection operation between the link output port 204 and the link input port 203 that are between the two function block nodes FB1 and FB2, an instruction label 207 used for indicating an execution order of function block nodes may be further generated for the function block nodes FB1 and FB2 connected to each other, and the instruction label 207 is marked on a function block type diagram of the function block nodes FB1 and FB2, for example, 1 and 2 that are shown in the figure. In addition, the instruction label 205 may be further used as an index of a goto instruction and as a chapter index of a description document.

(4) Input data chunk 208 used for representing a set of all data input ports and output data chunk 209 used for representing a set of all data output ports, where in this embodiment, a quantity of data input ports of a function block node may be marked on the input data chunk 208, for example, 5 on an input data chunk 208 of the function block node FB1 and 2 on an input data chunk 208 of the function block node FB2. The input data chunk 208 may be hidden if the quantity of data input ports is zero. Similarly, a quantity of data output ports of a function block node may be marked on an output data chunk 209, for example, 3 on an output data chunk 209 of the function block node FB1 and 1 on an output data chunk 209 of the function block node FB2. The output data chunk 209 may be hidden if the quantity of data output ports is zero.

In this embodiment, as shown in FIG. 2U to FIG. 2X, data input ports of the function block node may be expanded or hidden by clicking on the input data chunk 208. Data output ports of the function block node may be expanded or hidden by clicking on the output data chunk 209. FIG. 2U is a diagram of hiding data input ports of a logical node 2 through clicking. FIG. 2V is a diagram of hiding data output ports of a logical node 1 through clicking. FIG. 2W is a diagram of simultaneously displaying data input ports and data output ports. FIG. 2X is a diagram of simultaneously hiding data input ports and data output ports.

(5) Data input port 210 and data output port 211 that are configured to trigger data transmission, where in this embodiment, the function block node connection operation may further include: a connection operation between the data output port 211 and the data input port 210 that are between corresponding data of the two function block nodes FB1 and FB2. A data connection 212 is established between the two function block nodes FB1 and FB2 through the connection operation. The data connection 212 in this example is used for indicating data transmission between the two function block nodes FB1 and FB2. As shown in FIG. 2U, a data connection 212 is established between a data output port 211 of output data 1 of a function block node FB1 and a data input port 210 of input data 2 of a function block node FB2. That is, it represents that the output data 1 of the function block node FB1 serves as the input data 2 of the function block node FB2.

During specific implementation, similar to a link input/output port, to avoid a click error and improve sensitivity of connecting a function block node, a sensitive area (not shown in the figure), referred to as a third sensitive area herein, may also exist within a specified range of the data input port 210, and is configured to locate a connection endpoint on the data input port 210 when a click and connection operation of a user are received within the third sensitive area. Similarly, a sensitive area (not shown in the figure), referred to as a fourth sensitive area herein, may also exist within a specified range of the data output port 211, and is configured to locate a connection endpoint on the data output port 211 when a click and connection operation of a user are received within the fourth sensitive area.

(6) Function block icon 213, where specifically, the function block icon 213 may be a vector icon 213, and is configured to visually represent a service operation of a function block node. Certainly, in another implementation, the function block icon 213 may alternatively be omitted.

(7) Function block body 214 configured to carry the foregoing composition parts, where in this embodiment, the addition operation on the function block node may include: a drag operation on the function block body 214.

Step S12B: Construct, in response to the function block node addition and connection operation, a behavior tree corresponding to a workflow.

In this step, in response to the addition operation and the connection operation on the function block node, a behavior tree including a flow control node and a function block node that is based on a function block label diagram in S12A may be synchronously constructed. Similarly, when the behavior tree including the flow control node and the function block node that is based on the function block label diagram is constructed in step S12A, a behavior tree based on a function block type diagram in S12B may also be synchronously constructed. In addition, the two behavior tree construction interfaces may be switched according to a user selection. For example, according to a click operation of a user on the behavior tree based on the function block type diagram or the behavior tree based on the function block label diagram, the behavior tree based on the function block type diagram or the behavior tree based on the function block label diagram may be switched and displayed.

Further, in another implementation, whether creation of the behavior tree is performed based on a function block node in a form of a label diagram or a function block node in a form of a type diagram, at least one data block may be further added and connected to each of at least one function block node in the behavior tree. Each data block is used for presenting corresponding data in a service operation of a function block node connected to the data block. A type of the data block may include some or all of a data pair, a data sheet, an image, a video, a chart, and the like.

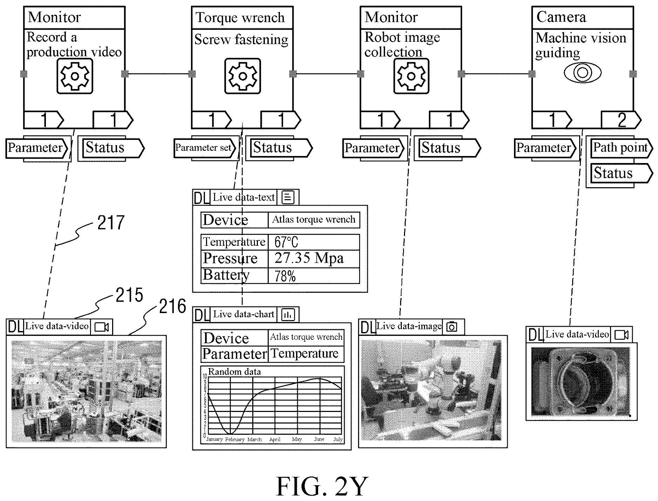

FIG. 2Y is a diagram of separately adding a data block in four function block nodes in a behavior tree and displaying corresponding data in each data block according to an example of this application. In this example, a behavior tree creation interface based on a function block type diagram is used as an example. As shown in FIG. 2Y, in this example, a data block of a type of live data-video (Live Data-Video) is added in a function block node that is for recording a production video and that is associated with a monitor. A data block of a type of live data-text (Live Data-Text) and a data block of a type of live data-chart (Live Data-Chart) are added in a function block node that is for screw fastening and that is associated with a torque wrench. A data block of a type of live data-image (Live Data-Image) is added in a function block node that is for robot image collection and that is associated with a monitor. A data block of a type of live data-video (Live Data-Video) is added in a function block node that is for machine vision guiding and that is associated with a camera.

As shown in FIG. 2Y, each data block may include a data block label 215 used for indicating a type of the data block and a data block body 216 used for presenting a display area of specific data. The data block label 215 may be a draggable label, for example, may be moved to any position in a canvas. The display area of the data block body 216 is adjustable in size, and is used to display different types of data from a data layer in real time. A monitor link 217 is established between each data block and a corresponding function block node, and one function block may be mapped to a plurality of data blocks. When a workflow is executed, for example, in a runtime, monitoring and output data corresponding to the function block node are transmitted to a corresponding data block for displaying in real time.

The data block in this embodiment is a low-code data block, and is different from other SCADA and dashboard systems in that, the low-code data block in this embodiment is also a low-code element, and may be used as a part of a behavior tree, and all attributes thereof may be managed in low-code logic.

A data source in the low-code data block is from the data layer, and the data may be obtained through an interface provided by the data layer in a runtime or in a cloud execution engine. The data source may be a time series database, an RDBMS, or NoSQL. The low-code data block is a flexible, scalable, and adaptable system, and is applied to any function block node that may be associated with a physical device. In conclusion, a data block for implementing data monitoring may be considered as a data layer visualization interface.

Further, in another implementation, whether creation of the behavior tree is performed based on a function block node in a form of a label diagram or a function block node in a form of a type diagram, at least one data block may be further added and connected to each of at least one function block node in the behavior tree. Each data block is used for presenting corresponding data in a service operation of a function block node connected to the data block. A type of the data block may include some or all of a data pair, a data sheet, an image, a video, a chart, and the like.

FIG. 2Y is a diagram of separately adding a data block in four function block nodes in a behavior tree and displaying corresponding data in each data block according to an example of this application. In this example, a behavior tree creation interface based on a function block type diagram is used as an example. As shown in FIG. 2Y, in this example, a data block of a type of live data-video (Live Data-Video) is added in a function block node that is for recording a production video and that is associated with a monitor. A data block of a type of live data-text (Live Data-Text) and a data block of a type of live data-chart (Live Data-Chart) are added in a function block node that is for screw fastening and that is associated with a torque wrench. A data block of a type of live data-image (Live Data-Image) is added in a function block node that is for robot image collection and that is associated with a monitor. A data block of a type of live data-video (Live Data-Video) is added in a function block node that is for machine vision guiding and that is associated with a camera.

As shown in FIG. 2Y, each data block may include a data block label 215 used for indicating a type of the data block and a data block body 216 used for presenting a display area of specific data. The data block label 215 may be a draggable label, for example, may be moved to any position in a canvas. The display area of the data block body 216 is adjustable in size, and is used to display different types of data from a data layer in real time. A monitor link 217 is established between each data block and a corresponding function block node, and one function block may be mapped to a plurality of data blocks. When a workflow is executed, for example, in a runtime, monitoring and output data corresponding to the function block node are transmitted to a corresponding data block for displaying in real time.

The data block in this embodiment is a low-code data block, and is different from other SCADA and dashboard systems in that, the low-code data block in this embodiment is also a low-code element, and may be used as a part of a behavior tree, and all attributes thereof may be managed in low-code logic.

A data source in the low-code data block is from the data layer, and the data may be obtained through an interface provided by the data layer in a runtime or in a cloud execution engine. The data source may be a time series database, an RDBMS, or NoSQL. The low-code data block is a flexible, scalable, and adaptable system, and is applied to any function block node that may be associated with a physical device. In conclusion, a data block for implementing data monitoring may be considered as a data layer visualization interface.

In addition, in this embodiment, step S13 and step S14 described below may be further included based on FIG. 1A and FIG. 1B, to constitute the workflow execution method shown in FIG. 1F.

Step S13: Analyze a behavior tree including function block nodes and connection relationships thereof to obtain a workflow representing service operations to be performed by resources in a workcell. The resource herein may include a dynamic resource.

In this step, during specific implementation, there may be a plurality of implementation forms. For example, a workflow in a format of a markup (Markup) language such as XML (extensible Markup language) may be obtained after the behavior tree constructed in FIG. 1A and FIG. 1E is analyzed. Alternatively, the behavior tree constructed in FIG. 1A and FIG. 1E may be compiled by using a compiler into a workflow represented by behavior tree logic.

Step S14: Deploy the workflow to a runtime of the corresponding workcell, so that the runtime executes the workflow to control the resources in the workcell to perform the service operations according to the workflow. The runtime stores and manages implementation parts of the function block nodes. If resources associated with the function block nodes include a dynamic resource, in this step, the runtime may further determine a resource instance of the dynamic resource according to field resource data, for example, determine the resource instance of the dynamic resource according to a dynamic resource flow of the dynamic resource according to the field resource data, and then may control the resources including the resource instance to perform operations according to the workflow.

During specific implementation, this step may be implemented in a plurality of forms. For example, for the workflow in the markup language format obtained in step S13, in this step, the workflow in the markup language format may be provided to the runtime of the corresponding workcell, so that the runtime converts the workflow in the markup language format into a workflow in a node link assembly format, executes the workflow in the node link assembly format, and selects an appropriate execution engine for the function block nodes in the workflow to schedule a corresponding resource to perform a corresponding service operation.

For another example, for the workflow represented by the behavior tree logic obtained in step S13, in this step, the workflow represented by the behavior tree logic may be provided to the runtime of the corresponding workcell, so that the runtime builds the workflow represented by the behavior tree logic into a binary executable file, and executes the binary executable file to schedule a corresponding resource to perform a corresponding service operation.

Correspondingly, FIG. 1G is an example flowchart of a workflow execution method on a runtime side. As shown in FIG. 1G, the method includes the following steps:
Step S15: Receive, by a runtime, a workflow representing service operations to be performed by resources in a workcell, where the workflow is obtained by analyzing a behavior tree including function block nodes and connection relationships thereof.

In this step, the workflow may be a workflow in a markup language format, or may be a workflow represented by behavior tree logic.

Step S16: The runtime converts the workflow into an executable format file, and executes the executable format file to schedule a corresponding resource to perform a corresponding service operation.

In this step, for the workflow in the markup language format, the runtime may convert the workflow in the markup language format into a workflow in a node link assembly format, execute the workflow in the node link assembly format, and select an appropriate execution engine for the function block nodes in the workflow to schedule a corresponding resource to perform a corresponding service operation. For the workflow represented by the behavior tree logic, the runtime may build the workflow represented by the behavior tree logic into a binary executable file, and execute the binary executable file to schedule a corresponding resource to perform a corresponding service operation.

In addition, the runtime may further debug and monitor an execution status when using an execution engine to schedule a corresponding resource to perform a corresponding service operation. In addition, the runtime may further integrate a skill of an open-source community into the runtime, and support open-source communities of various different language types, for example, forty to fifty languages such as C/C++, C#, and Java.

In an example, the runtime may be deployed to single-board machine or an industrial personal computer for execution.

The runtime 30 in this embodiment is an interpreter-driven runtime system, configured to execute the workflow and manage a necessary related process. The system is based on an interpreter with a good open-source community, for example, may be based on a Python and Google V8 interpreter. Therefore, an ecosystem is easy to establish and can be easily expanded to use another interpreter.

For a behavior tree to which a data block is connected, the runtime may further provide corresponding data obtained in a process of performing a service operation to the corresponding data block for display. During specific implementation, the runtime may directly provide the corresponding data obtained in the process of performing a service operation to the corresponding data block for display or provide the corresponding data to the corresponding data block through a third-party device for display.

In this embodiment, the runtime may access a field bus and device by using a standard field bus and device protocol in advance. During specific implementation, the workcell may have a main controller. In this case, the runtime may be located in the main controller of the workcell. A device resource in the resources may be connected to the main controller, and the main controller controls, according to a workflow of the runtime, the device resource connected to the main controller to perform a corresponding operation. Human resources and the like in the resources may directly perform corresponding operations according to a prompt of the workflow of the runtime.

In addition, according to a definition by Gartner, an OT domain generally refers to an operational technology (Operational Technology, OT), which integrates hardware and software, and detects or triggers a process change or an occurrence of an event in an enterprise by directly monitoring and/or controlling a physical device (referred to as an OT device). The OT is to monitor or change a physical state of, for example, an industrial control system (Industrial Control System, ICS) by using a computer. The industrial control system is a computer-implemented facility, system, and device, and is configured to remotely monitor and/or control a key industrial process and implement a physical function. The term "OT" is used to distinguish between the industrial control system and a conventional information technology (Information Technology, IT) system in terms of technical implementation and function.

Currently, many IT low-code development tools or platforms exist in the market. Some tools are directed to an Internet of Things usage scenario, and are directed to an experienced IT engineer. However, it is difficult for an OT engineer and a primary IT engineer to understand paradigms thereof. However, some tools are more applicable to an IT domain low-code development usage scenario, but are not well applicable to the OT domain.

The foregoing workflow execution method in this embodiment may be used in the OT domain, and is used as a type of OT domain low-code development method. Specifically, the workflow building and execution methods shown in FIG. 1A, FIG. 1D, and FIG. 1E may be implemented in the OT domain, for example, on an OT domain low-code development platform. Correspondingly, the workflow may be an OT domain workflow; the workcell may be a workcell in the OT domain; and the resource may be an OT resource. Herein, the OT resource may include, but is not limited to: an Internet of Things (Internet of Things, IoT) device, a programmable logic controller (Programmable Logic Controller, PLC), robotics (Robotics), a manual process (Manual Process), an industrial personal computer (Industrial Personal Computer, IPC), and the like.

In addition, in embodiments of this application, it is considered that, currently, convergence of an IT domain and an OT domain becomes increasingly important in a digital transformation process of an enterprise. To converge the IT domain and the OT domain into an ITOT system, currently, a problem urgently to be resolved is how the enterprise collects data of the OT domain in a manner that is easy to understand rather than an IT domain programming manner and controls an OT domain process.

The foregoing workflow creation and execution methods in the embodiments may be applied to the ITOT system as a type of low-code development method of an OT domain that may be converged with the IT domain. Similarly, the workflow building and execution methods shown in FIG. 1A, FIG. 1D, and FIG. 1E may be implemented in the OT domain, for example, on an OT domain low-code development platform. Correspondingly, the workflow may be an OT domain workflow; the workcell may be a workcell in the OT domain; and the resource may be an OT domain resource.

In addition, to implement the convergence of the IT domain and the OT domain, based on the workflow building method shown in FIG. 1A and FIG. 1D, the following may be further included: generating a microservice based on the behavior tree, so that an IT device calls the microservice to trigger a runtime of a main controller of the workcell to execute the OT domain workflow. During specific implementation, the IT device may call the microservice directly or through a knowledge middle platform. Correspondingly, in this embodiment, the runtime may have a microservice interface, configured to communicate with a microservice corresponding to the behavior tree, so that when an IT device calls the microservice, the runtime is triggered to execute the OT domain workflow. In addition, the runtime may provide, through the microservice, corresponding data obtained in a process of performing a service operation to a corresponding data block for display. Alternatively, the runtime may provide corresponding data obtained in a process of performing a service operation to the knowledge middle platform. After performing processing including filtering on the data, the knowledge middle platform directly provides the data or provides the data through the microservice to a corresponding data block for display.

When a microservice is generated based on the behavior tree, an APIof the microservice may be generated based on the behavior tree, where a processing process in the API includes service operations in the OT domain workflow, an input parameter of the API is a parameter obtained through an input port of the OT domain workflow, and an output parameter of the API is a parameter outputted through an output port of the OT domain workflow.

To implement that the microservice can be called in the IT domain, that information of the microservice can be obtained in the IT domain is required. Specific implementations include but are not limited to the following two manners:
Manner 1:
In Manner 1, an OT domain code developer may notify an IT domain code developer of a generated name and IP address of each microservice. In this way, the IT domain code developer may directly write information of each microservice into code in a development process, to implement calling of the microservice by the IT device. Manner 1 is relatively suitable for a scenario with a relatively small quantity of microservices.
Manner 2:
In Manner 2, a registration and discovery mechanism may be used. That is, each microservice is registered on the knowledge middle platform, so that an IT domain code development tool implements that the IT device discovers a connected microservice through the knowledge middle platform. During specific implementation, an IT domain code development tool may be used to implement, through code development, that the IT device discovers a connected microservice through the knowledge middle platform. An apparatus that completes registration of the microservice may be an OT domain microservice generator or a third-party apparatus. The third-party apparatus may be considered as a part of the OT domain low-code development platform, or implemented in the knowledge middle platform. Manner 2 is relatively suitable for a scenario with a relatively large quantity of microservices.

In this embodiment, the IT device may include but is not limited to: a manufacturing operation management (Manufacturing Operation Management, MOM) system, a manufacturing execution system (manufacturing execution system, MES), an enterprise resource planning (Enterprise Resource Planning, ERP) system, an enterprise service bus (Enterprise Service Bus, ERP), and a product lifecycle management (Product Lifecycle Management, PLM) system.

In this embodiment, the IT domain code development tool may be used to implement, through programming, that the IT device calls a microservice through the knowledge middle platform to trigger a runtime of the main controller of the workcell to execute the OT domain workflow, so as to implement that the IT domain code development platform controls an OT domain process, that is, implement convergence of the IT domain and the OT domain. Herein, the microservice is automatically generated by an OT domain microservice generator based on an OT domain behavior tree, the IT domain code development tool does not need to understand details of the OT domain workflow, but only needs to obtain an identifier of the microservice (for example, a name) and an IP address, and an IT domain developer does not need to learn of an OT device and a control process. This is easy to implement and understand.

Fields to which embodiments of this application may be applied include but are not limited to: industrial automation (Industrial Automation), logistics (Logistics), laboratory (Laboratory), maritime (Maritime), a smart grid (Smart Grid), an electric vehicle infrastructure (Electric Vehicle Infrastructure), an electric vehicle (Electric Vehicle), building automation (Building Automation), a smart city (Smart City), water treatment (Water Treatment), garbage recycling (Garbage Recycling), and a smart farm (Smart Farm).

The workflow execution method in embodiments of this application is described in detail above. A workflow execution system in embodiments of this application is described in detail below. The workflow execution system in embodiments of this application may be configured to implement the workflow execution method in embodiments of this application. For details that are not disclosed in detail in the system embodiments of the present invention, refer to corresponding descriptions in the method embodiments of the present invention. Details are not described herein.

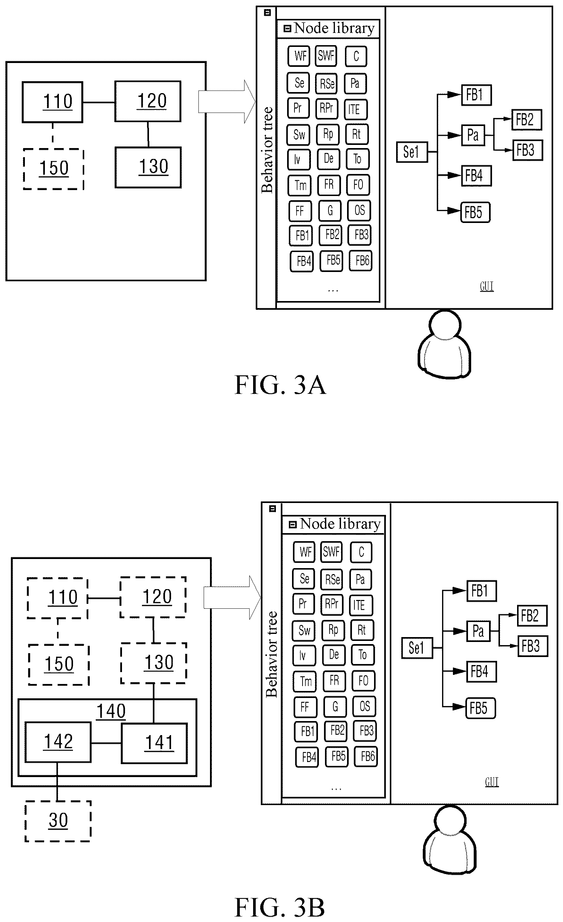

FIG. 3A is a diagram of a structure of a workflow building system according to an embodiment of this application. As shown in FIG. 3A, the system may include: a node library 110, a graphical interface module 120, and an editing and processing module 130.

The node library 110 is provided with a behavior tree node configured to construct a behavior tree. The behavior tree node may include: a flow control node and a function block node. One behavior tree is used for representing one workflow, and the workflow is used for defining an operation to be performed by one workcell. The flow control node is configured to implement logic control in the workflow. The function block node is configured to implement a service operation in the workflow. The function block node may include: a logical node, where each logical node corresponds to one operation template, and each operation template predefines an operation that at least one type of resource such as a device can perform, the operation including: an action, a method, or a skill. In addition, the node library 110 may further include various types of data blocks. Each data block is configured to present corresponding data in a service operation of a function block node connected to the data block. The types of the data block include: some or all of data types such as a data pair, a data sheet, an image, a video, and a chart.

In an implementation, the resource is represented in a form of a resource node, and all resource nodes are associatively stored in a form of a resource knowledge graph. The resource knowledge graph includes: the resource nodes, and a connection line representing a relationship between the resource nodes. Correspondingly, in this embodiment, the system may further include, as shown in a dashed part in the figure, a resource library 150, configured to store resources in the form of the resource knowledge graph, where each resource can perform at least one service operation. The resource herein may include a dynamic resource.

In an implementation, the flow control node may include: some or all of a main control node, a logical control node, and a condition node. The main control node may include: some or all of a start node, an end node, a goto node, an anchor node, a stop node, and an abort node. The logical control node includes: some or all of a sequence node, a reactive sequence node, a parallel node, an in-process quality control node, a priority node, a reactive priority node, an if-then-else node, and a multi-branch selection node.

In an implementation, the function block node may further include: some or all of a manual node, a dynamic node, a delay node, and an idle node.

In an implementation, the behavior tree node further includes: a decorator node, which may include: some or all of a repeat node, a retry node, a one-shot node, a timeout node, a timer node, an inverter node, a force run node, a force OK node, a force failed node, and a guard node.

In an implementation, some or all of function block nodes in the node library 110 are respectively bound with resources for performing service operations corresponding to the function block nodes. The resource herein may include a dynamic resource.

In addition, in another implementation, the function block node in the node library 110 may be presented in a form of a label diagram as shown in FIG. 2A to FIG. 2T, or may be presented in a form of a type diagram as shown in FIG. 2T to FIG. 2X. Certainly, in another implementation, the function block node in the node library 110 may alternatively be presented only in the form of the type diagram. A specific structure of a function block node in a form of a function block type diagram may be shown in FIG. 2T. Details are not described herein.

The graphical interface module 120 is configured to provide, for a user, a graphical user interface (GUI) for constructing a behavior tree based on behavior tree nodes in the node library 110. In addition, a data block addition and connection operation may be further performed on the graphical user interface (GUI).

During specific implementation, the graphical user interface may include a first graphical user interface for constructing a behavior tree based on a flow control node and a function block node in a form of a function block label diagram and a second graphical user interface for constructing a behavior tree based on a function block node in a form of a function block type diagram, and the two graphical user interfaces may be switched for display according to a user selection. A behavior tree construction operation may include a function block node addition and connection operation. On the second graphical user interface, the add operation on the function block node may include: a drag operation on a function block body. The function block node connection operation may include: a connection operation between a link output port and a link input port that are between two function block nodes, and a connection operation between a data output port and a data input port that are between corresponding data of the two function block nodes.

The behavior tree nodes may be listed in forms of icons on the graphical user interface (GUI).

The editing and processing module 130 is configured to generate, in response to the behavior tree construction operation, a behavior tree corresponding to a workflow. In addition, the editing and processing module 130 is further configured to add and connect, in response to the data block addition and connection operation, at least one data block to each function block node of at least one function block node in the behavior tree.

During specific implementation, in an implementation, the editing and processing module 130 may instantiate the behavior tree nodes in response to the behavior tree construction operation, and establish a connection relationship between the instantiated behavior tree nodes; and generate a behavior tree corresponding to a workflow based on the connection relationship between the instantiated behavior tree nodes. Some or all of the instantiated function block nodes are associated with resources for performing corresponding service operations. For example, the logical node is instantiated as an operation of a corresponding resource such as a device through the operation.

In this embodiment, the behavior tree nodes and the data blocks may be listed in forms of icons on a graphical user interface. A user may determine, by selecting and dragging an icon to add the icon to a canvas, a node required to create a workflow. Further, necessary parameter configuration, such as resource configuration and/or input/output parameter configuration, may be further performed on the node.

If there is more than one service operation to be performed by a workcell, to be specific, there is more than one service operation defined in a required workflow, a behavior tree corresponding to the workflow may include a plurality of logical nodes. According to an order of and an interrelationship between the operations, an execution order of the logical nodes is determined, and a behavior tree corresponding to the workflow is finally generated by making a corresponding arrangement connection to a dragged node.

In an implementation, the behavior tree construction operation may further include: an operation of associating an added function block node with a resource.

Corresponding to the method shown in FIG. 1E, a workflow execution system in an embodiment of the present invention may include, as shown in FIG. 3B, an analysis and deployment module 140, which may be configured to analyze a behavior tree to obtain a workflow representing service operations to be performed by resources in a workcell; and deploying the workflow to a runtime 30 of the corresponding workcell, so that the resources in the workcell perform the service operations according to the workflow. During specific implementation, the analysis and deployment module 140 may include an analysis module 141 and a deployment module 142. The analysis module 141 is configured to analyze the behavior tree to obtain a workflow representing service operations to be performed by resources in a workcell. The deployment module 142 is configured to deploy the workflow to a runtime 30 of the corresponding workcell, so that the resources in the workcell perform the service operations according to the workflow. Correspondingly, after receiving the workflow representing the service operations to be performed by the resources in the workcell, the runtime 30 converts the workflow into an executable format file, and executes the executable format file to schedule a corresponding resource to perform a corresponding service operation. If at least one function block node in the workflow has a dynamic resource bound thereto, the runtime 30 may further determine a resource instance of the dynamic resource according to field resource data, for example, determine the resource instance of the dynamic resource according to a dynamic resource flow of the dynamic resource according to the field resource data, and then may control resources including the resource instance to perform operations according to the workflow.

If the workflow is a workflow in a markup language format, the runtime 30 is configured to convert the workflow in the markup language format into a workflow in a node link assembly format, execute the workflow in the node link assembly format, and select an appropriate execution engine for the function block nodes in the workflow to schedule a corresponding resource to perform a corresponding service operation. If the workflow is a workflow represented by the behavior tree logic, the runtime 30 is configured to build the workflow represented by the behavior tree logic as a binary executable file, and execute the binary executable file to schedule a corresponding resource to perform a corresponding service operation.

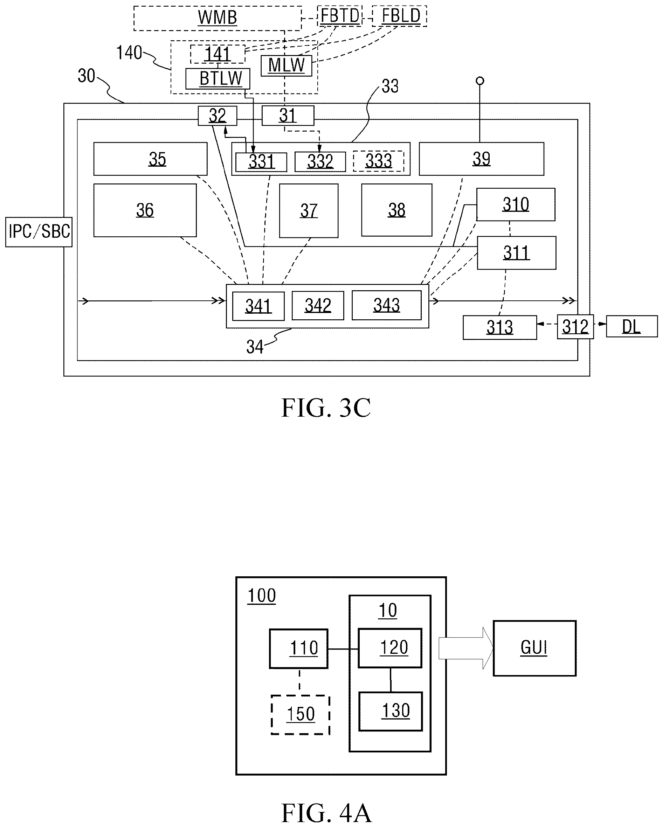

FIG. 3C is a diagram of a structure of a workflow execution system according to an example of the embodiments. As shown in FIG. 3C, the system includes: a runtime 30.

A behavior tree construction module such as a low-code development platform (Low-code Engineering Platform Workcell Microservices Builder, WMB) (which may include, for example, the foregoing node library 110, graphical interface module 120, and editing and processing module 130, and the like during specific implementation) may construct a behavior tree including a plurality of function block nodes and connection relationships thereof. The behavior tree may be a behavior tree based on a function block type diagram (FBTD) or a behavior tree based on a function block label diagram (FBLD). At least one of the plurality of function block nodes may have a dynamic resource bound thereto.

The analysis and deployment module 140 may analyze the behavior tree to obtain a workflow representing service operations to be performed by resources in a workcell, and deploy the workflow on the runtime 30 of the corresponding workcell, so that the resources in the workcell perform the service operations according to the workflow. The resources may include a dynamic resource. In this case, the runtime 30 may determine a resource instance of the dynamic resource according to field resource data (for example, determine the resource instance of the dynamic resource according to a dynamic resource flow of the dynamic resource), and control the resources including the resource instance to perform operations according to the workflow. During specific implementation, there may be two implementations. One is to obtain a workflow in a markup language format (MLW). The other is to generate a workflow represented by a behavior tree logic (BTLW) by using a compiler 141.

In this embodiment, the runtime 30 is configured to receive a workflow representing service operations to be performed by resources in a workcell, convert the workflow into an executable format file, and execute the executable format file to schedule a corresponding resource to perform a corresponding service operation.

In this embodiment, the runtime 30 may include: a format conversion module 31, a code executor 32, a scheduler 33, an execution engine module 34, a debug module 35, an open interface 36, a community-driven openness 37, a text-driven element 38, a microservice interface 39, a function block node management module 310, a function block node aggregation 311, a universal API interface 312, and a data monitoring module 313.

The format conversion module 31 is configured to convert a workflow in a markup language format into a workflow in a node link assembly (NLA) format.

The scheduler 33 includes a builder 331 and an NLA executor 332. In addition, the system may further include: a dynamic resource injector 333, configured to inject a new resource instance into the dynamic resource. For the dynamic resource, the scheduler may determine a resource instance of the dynamic resource according to field resource data (for example, determine the resource instance of the dynamic resource according to a dynamic resource flow of the dynamic resource).

The NLA executor 332 is configured to execute the workflow in the node link assembly format, and provide the function block nodes in the workflow to the execution engine module 34. For the dynamic resource, the NLA executor 332 may determine a resource instance of the dynamic resource according to field resource data (for example, determine the resource instance of the dynamic resource according to a dynamic resource flow of the dynamic resource).

The builder 331 is configured to build the workflow represented by the behavior tree logic into a binary executable file. For the dynamic resource, the builder 331 may determine a resource instance of the dynamic resource according to field resource data (for example, determine the resource instance of the dynamic resource according to a dynamic resource flow of the dynamic resource).

The code executor 32 is configured to execute the binary executable file to schedule a corresponding resource to perform a corresponding service operation.

The execution engine module 34 is configured to select an appropriate execution engine for each of the function block nodes to schedule a corresponding resource to perform a corresponding service operation. For example, the execution engine module 34 may select, for each of the function block nodes according to a user setting, an interpreter 341, a compiler 342, or another interpreter adapter 343 to schedule a corresponding resource to perform a corresponding service operation.

The interpreter 341 has characteristics of a slow execution speed, but good traceability and debuggability. In this embodiment, default interpreters may be Google V8 and Python.

The compiler 342 has characteristics contrary to those of the interpreter 341, and has characteristics of a fast execution speed, but poor traceability and debuggability. In this embodiment, the compiler 342 may be a just-in-time (JIT) compiler.

The another interpreter adapter 343 is configured to be selected when execution cannot be performed by the interpreter 341 and the compiler 342. Certainly, in some applications, the another interpreter adapter 343 may alternatively be omitted.

It can be learned that, corresponding to the two implementations of the analysis and deployment module 140, there may also be two implementations of the runtime 30. One is that the format conversion module 31 converts the workflow in the markup language format into the workflow in the node link assembly (NLA) format. Then, the NLA executor 332 in the scheduler 33 executes the workflow in the node link assembly format, and provides the function block nodes in the workflow to the execution engine module 34, and the execution engine module 34 selects an appropriate execution engine to schedule a corresponding resource to perform a corresponding service operation. For example, the execution engine module 34 may select, for each of the function block nodes according to a user setting, an interpreter 341, a compiler 342, or another interpreter adapter 343 to schedule a corresponding resource to perform a corresponding service operation. During specific implementation, the execution engine module 34 may read an implementation part of a corresponding function block node from the function block node aggregation 311. The function block node aggregation 311 stores implementation parts of the function block nodes. The function block management module 310 is configured to manage and schedule the function block nodes in the function block node aggregation 311. The other implementation of the runtime 30 is as follows. For the workflow represented by the behavior tree logic, the builder 331 in the scheduler 33 builds the workflow represented by the behavior tree logic into a binary executable file, and the code executor 32 executes the binary executable file to schedule a corresponding resource to perform a corresponding service operation.

During specific implementation, one of an implementation combination including the format conversion module 31, the NLA executor 332, and the execution engine module 34 and an implementation combination including the builder 331 and the code executor 32 may be selected. In other words, in some implementations, the runtime 30 may include only any combination thereof, and does not need to include all thereof.

The debug module 35 is configured to debug the workflow before executing the workflow, and monitor data in a debug process.

The open interface 36 accesses a field bus and device by using a standard field bus and device protocol.

The community-driven openness 37 can integrate skills of an open-source community into the runtime 30. Based on this, the WMB may easily implement function blocks of different functions, and supports forty to fifty languages, for example, languages such as C/C++, C#, and Java.

The text-driven element 38 may use markup text descriptions to represent all function blocks and other exchange data of the runtime. In the WMB runtime, the text-driven element is in a common runtime engineering exchange model (Common Runtime Engineering Exchange Model, CREEM) format, and supports meta-tracking, version control, and DevOps.

The microservice interface 39 is configured to: when a microservice corresponding to the workflow (that is, a microservice corresponding to the behavior tree) is called, trigger the runtime 30 to execute the workflow.

The function block node management module 310 is configured to manage and call the implementation parts of the function block nodes in the function block node aggregation 311.

The function block node aggregation 311 stores the implementation parts of the function block nodes. For a logical block in the function block, a hardware abstraction layer (HAL) may be provided, to perform hardware abstraction on the logical node and hide hardware interface details of a specific platform.

The data monitoring module 313 is configured to obtain, through the universal API interface 312 when the implementation parts of the function block nodes are executed, data collected at a field data layer (DL), and monitor the data; and further, provide the data to a corresponding data block for display, and provide hardware operation data to the field data layer.

Specifically, the workcell may have a main controller. In this case, the runtime may be located in the main controller of the workcell. Correspondingly, a device resource in the resources may be connected to the main controller, and the main controller controls, according to the workflow of the runtime, the device resource connected to the main controller to perform a corresponding operation. Human resources and the like in the resources may directly perform corresponding operations according to a prompt of the workflow of the runtime.

FIG. 4A shows an OT domain low-code development platform 100 according to an embodiment of this application. The platform 100 may be configured to implement the workflow execution system shown in FIG. 3.

As described above, currently, there is no low-code development tool and platform suitable for an OT domain. In the platform 100 shown in FIG. 4A, an operation template using which various types of OT devices can perform an operation is pre-defined (which may be considered as providing a capability of the OT domain), a corresponding logical node is constructed based on the operation template, and another behavior tree node for building an OT domain workflow is provided. Therefore, a behavior tree corresponding to the OT domain workflow may be conveniently and quickly created, so that low-code development suitable for the OT domain is implemented. A development engineer can implement OT domain development without having a deep understanding of the various types of OT devices.

Specifically, as shown in FIG. 4A, the OT domain low-code development platform 100 may include:
an OT domain low-code development tool 10. The OT domain low-code development tool 10 may be configured to implement the graphical interface module 120 and the editing and processing module 130 in the workflow execution system shown in FIG. 3, and further, may implement the analysis and deployment module 140 in the workflow execution system shown in FIG. 3. The node library 110 and the resource library 150 in the workflow execution system shown in FIG. 3 may be stored in a memory.

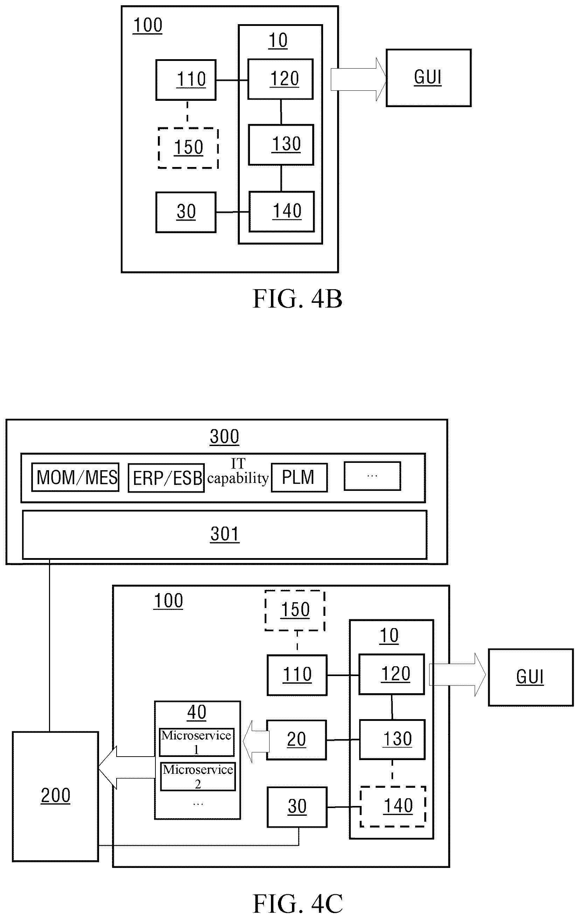

Further, as shown in FIG. 4B, an OT domain low-code development platform 100 may further include a runtime 30 of the foregoing workcell. The OT domain low-code development tool 10 may deploy an OT domain workflow corresponding to a generated behavior tree to the runtime 30 of the workcell, so that the runtime 30 executes the workflow to control various OT resources, such as OT devices, in the workcell to perform operations according to the OT domain workflow.

Composition of the OT domain low-code development platform 100 shown in FIG. 4A and FIG. 4B only relates to the OT domain. However, convergence of the IT domain and the OT domain is increasingly important for digital transformation of an enterprise. What needs to be implemented is how the enterprise controls a process of the OT domain in a manner that is easy to be understood and that is a non-IT programming manner. An OT domain low-code development platform 100 shown in FIG. 4C implements a process of how to control an OT domain through an IT domain code development platform 300. As shown in FIG. 4C, based on the structure shown in FIG. 4B, the OT domain low-code development platform 100 may further include an OT domain microservice generator 20, which may generate a microservice 40 based on an OT domain behavior tree. In this way, the IT domain code development tool 301 may implement, through programming, that an IT device calls the microservice 40 through a knowledge middle platform 200 to trigger a runtime 30 of a main controller of a workcell to execute an OT domain workflow. In this way, control of an OT domain process by the IT domain code development platform 300 is implemented, that is, convergence of the IT domain and the OT domain is implemented. Herein, the microservice 40 is automatically generated by the OT domain microservice generator 20 based on the OT domain behavior tree, the IT domain code development tool 301 does not need to understand details of the OT domain workflow, but only needs to obtain an identifier of the microservice 40 (for example, a name) and an IP address, and an IT domain developer does not need to learn of an OT device and a control process. This is easy to implement and understand.

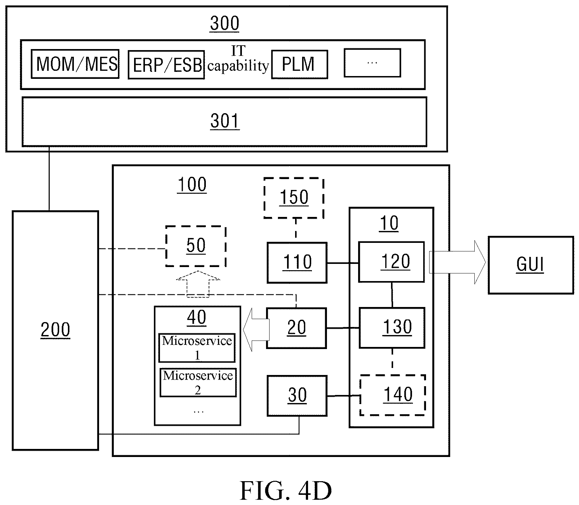

To implement that the microservice 40 can be called in the IT domain, that information of the microservice 40 can be obtained in the IT domain is required. Corresponding to the method shown in FIG. 1A, implementable manners thereof include but are not limited to the following two manners:
Manner 1:
In Manner 1, an OT domain code developer may notify an IT domain code developer of a generated name and IP address of each microservice 40. In this way, the IT domain code developer may directly write information of each microservice 40 into code in a development process, to implement calling of the microservice 40 by the IT device. Manner 1 is relatively suitable for a scenario with a relatively small quantity of microservices.
Manner 2:
In Manner 2, a registration and discovery mechanism may be used. Each microservice 40 may be registered on the knowledge middle platform 200. In this way, the IT domain code development tool 301 may implement, through code development, that the IT device discovers a connected microservice 40 through the knowledge middle platform 200. In addition, an apparatus that completes registration of the microservice 40 may be the OT domain microservice generator 20 or a third-party apparatus 50 as shown in FIG. 4D. The third-party apparatus 50 may be considered as a part of the OT domain low-code development platform 100, or may be implemented in the knowledge middle platform 200. Manner 2 is relatively suitable for a scenario with a relatively large quantity of microservices. The microservice is registered on the knowledge middle platform, so that calling of the microservice by the IT device is implemented more effectively, and convergence of the OT domain and the IT domain is enhanced.

Optionally, the OT domain microservice generator 20 may generate an API of the microservice 40 based on the OT domain behavior tree, where a processing process in the API may include operations of function block nodes in an OT domain workflow, an input parameter of the API is a parameter obtained by an input port of the OT domain workflow, and an output parameter of the API is a parameter outputted by an output port of the OT domain workflow.

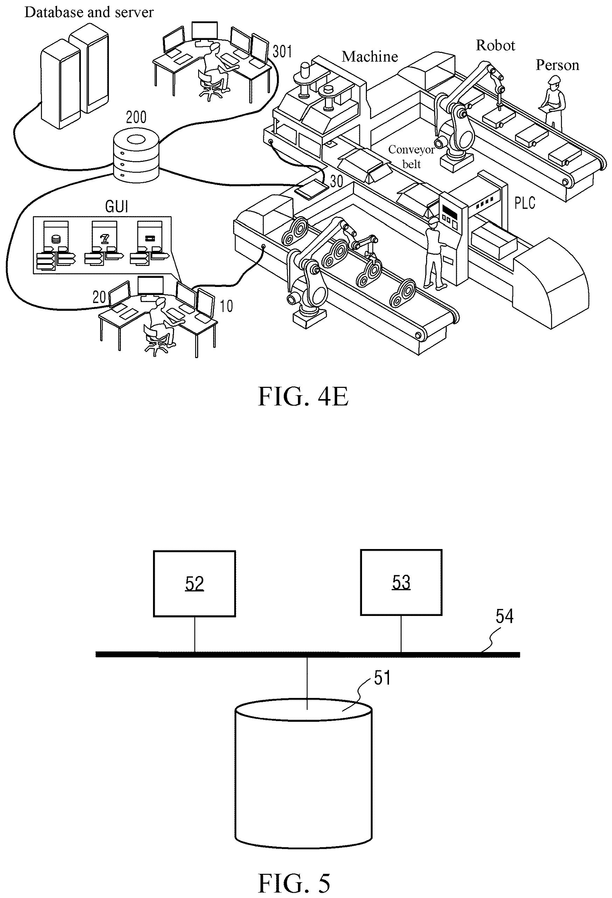

FIG. 4E shows an application scenario of an OT domain low-code development platform 100 in an industrial automation field according to an embodiment of this application. The low-code development tool 10 generates a behavior tree corresponding to an OT domain workflow under an operation of a user. The OT domain workflow defines an operation to be performed by a production line that serves as a workcell shown on a right side of FIG. 4E. The corresponding workflow is generated based on the behavior tree and published to the runtime 30, so that the runtime 30 performs control to complete the operation of the production line of the workcell. In addition, a corresponding microservice may be generated by the microservice generator 20 based on the behavior tree and registered on the knowledge middle platform 200. In this way, the IT domain code development tool 301 can call the corresponding microservice through the knowledge middle platform 200. As shown in a GUI at a lower left corner of FIG. 4E, the user may edit the OT domain behavior tree by editing, through dragging, various nodes including a function block node, for example, first, obtain required data (for example, a workpiece processing parameter) from a database & a server through the knowledge middle platform 200, to control operation of the entire workcell. The workcell herein is a production line, and the production line includes a machine, a conveyor belt, a robotic arm, a person, a PLC, an AGB, and the like. During specific implementation, the IT domain code development tool 301 may alternatively be located on a same hardware device as the low-code development tool 10, for example, on a same computer.

FIG. 5 is a diagram of a structure of another workflow building and/or execution system according to an embodiment of this application. As shown in FIG. 5, the system may be configured to implement the method shown in FIG. 1A, implement the workflow building and/or execution system shown in any one of FIG. 3A to FIG. 3C, or implement the workflow building and/or execution system shown in any one of FIG. 4A to FIG. 4D, that is, the OT domain low-code development platform 100. The OT domain low-code development tool 10, the OT domain microservice generator 20, the runtime 30, and the third-party apparatus 60 described above may each be implemented as a separate hardware device, for example, a server, a workstation, a single chip microcomputer, or a processing chip. Alternatively, these apparatuses are implemented on a same hardware device, and are stored as software programs in at least one memory, and invoked by at least one processor to implement the foregoing OT domain low-code development method. The node library 110, the resource library 150, and each generated microservice 40 may be stored in at least one memory.

As shown in FIG. 5, the system may include: at least one memory 51, at least one processor 52, and at least one display 53. In addition, some other components, for example, a communication port (not shown in FIG. 5), may be further included. These components perform communication through a bus 54.

The at least one memory 51 is configured to store a computer program. The at least one memory 51 may include a computer-readable medium, for example, a random access memory (RAM). In addition, the at least one memory 51 may further store an operating system and the like. The operating system includes but is not limited to: an Android operating system, a Symbian operating system, a Windows operating system, and a Linux operating system. The computer storage program may include the following program modules: a node library 110, a graphical interface module 120, an editing and processing module 130, an analysis and deployment module 140, and optionally, may further include an OT domain microservice generator 20, a runtime 30, and a third-party apparatus 50.

The at least one processor 52 is configured to invoke a computer program stored in the at least one memory 51, to perform the workflow building and/or execution method according to embodiments of this application. The at least one processor 52 may be a microprocessor or an application-specific integrated circuit (ASIC), a digital signal processor (DSP), a central processing unit (CPU), a graphics processing unit (GPU), a state machine, or the like. The processor can receive and transmit data through the communication port.

The at least one display 53 is configured to display a graphical user interface.

Specifically, the at least one processor 52 is configured to invoke the computer program stored in the at least one memory 51, to enable the system to perform the operations of the workflow building and/or execution method in any one of the foregoing implementations.

In addition, the communication interface is configured to implement communication with another device, for example, communication with the knowledge middle platform 200.

In this embodiment of this application, the OT domain low-code development tool 10 configured to implement the graphical interface module 120, the editing and processing module 130, and the analysis and deployment module 140 may be a lightweight web-based application program, and may be implemented on an industrial site (for example, an edge device or a local server), or may be implemented on a cloud (for example, a public cloud such as AWS or a private cloud such as OpenStack). An engineering paradigm for visualization thereof originates from a function block type diagram (Function Block Typed Diagram, FBTD). The OT domain microservice generator 20 may use a modern translated programming language to generate a standard API such as RESTful or RPC. The runtime 30 may simply implement an OT domain workflow, and provides openness based on an ecosystem of an open-source community (for example, Python). The runtime 30 may be deployed on, for example, an embedded industrial personal computer device of a single-board computer (Single Board Computer, SBC).

It should be mentioned that embodiments of this application may include an apparatus having an architecture different from that shown in FIG. 5. The foregoing architecture is merely an example, and is used for explaining the workflow building method and the workflow execution method that are provided in embodiments of this application.

In addition, an embodiment of this application further provides an IT domain and OT domain convergence system, that is, an ITOT system, which may include an IT device and the workflow building and/or execution system according to any one of the implementations of this application. In addition, the system may further include: the IT domain code development platform 300 as shown in FIG. 4C and FIG. 4D.

In addition, an embodiment of this application further provides a computer-readable storage medium. The computer-readable storage medium stores computer-readable code. The computer-readable code, when executed by a processor, enables the processor to perform the foregoing workflow building and/or execution method. In addition, an embodiment of this application further provides a computer program product. The computer program product is tangibly stored in a computer-readable medium and includes computer-executable instructions. The computer-executable instructions, when executed, enable at least one processor to perform the workflow building and/or execution method according to the embodiments of this application.

Specifically, a system or an apparatus provided with a storage medium may be provided, where the storage medium stores computer-readable code that implements functions of any one of the implementations of the foregoing embodiments, and a computer (or a CPU or an MPU) of the system or the apparatus is enabled to read and execute the computer-readable code stored in the storage medium. In addition, an operating system or the like operating on a computer may be enabled, based on instructions of the computer-readable code, to complete some or all of actual operations. The computer-readable code read from the storage medium may alternatively be written into a memory disposed in an expansion board inserted into the computer or into a memory disposed in an expansion unit connected to the computer, and then a CPU or the like mounted on the expansion board or the expansion unit is enabled, based on instructions of the computer-readable code, to perform some or all of actual operations, to implement the functions of any one of the foregoing implementations. In the embodiments, embodiments of the computer-readable medium include, but are not limited to, a floppy disk, a CD-ROM, a magnetic disk, and an optical disc (such as a CD-ROM, a CD-R, a CD-RW, a DVD-ROM, a DVD-RAM, a DVD-RW, a DVD + RW), a memory chip, a ROM, a RAM, an ASIC, a configured processor, an all-optical medium, all magnetic tapes or other magnetic media, or any other medium from which a computer processor can read instructions. In addition, various other forms of the computer-readable medium may transmit the instructions to the computer or carry the instructions, including a router, a private or public network, or other wired or wireless transmission devices or channels. For example, the computer-readable instructions may be downloaded from a server computer or a cloud by a communication network. The instructions may include code in any computer programming language, including C, C++, C language, Visual Basic, Java, and JavaScript.

It should be noted that, not all steps and modules in the procedures and the diagrams of the system structures are necessary, and some steps or modules may be omitted according to an actual requirement. An execution sequence of the steps is not fixed and may be adjusted according to a requirement. The apparatus structure described in the embodiments may be a physical structure or a logical structure. That is, some modules may be implemented by the same physical entity, or some modules may be implemented by a plurality of physical entities, or may be implemented by some components in a plurality of independent devices together.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A workflow execution method, comprising:
analyzing a behavior tree comprising function block nodes and connection relationships thereof to obtain a workflow representing service operations to be performed by resources in a workcell, wherein the function block nodes are configured to implement the service operations in the workflow; and
deploying the workflow to a runtime of the corresponding workcell, so that the resources in the workcell perform the operations according to the workflow.

2. The workflow execution method according to claim 1, wherein the workflow is a workflow in a markup language format; and
the deploying the workflow to a runtime of the corresponding workcell, so that the resources in the workcell perform the operations according to the workflow comprises:
providing the workflow in the markup language format to the runtime of the corresponding workcell, so that the runtime converts the workflow in the markup language format into a workflow in a node link assembly format, executes the workflow in the node link assembly format, and selects an appropriate execution engine for each of the function block nodes in the workflow to schedule a corresponding resource to perform a corresponding service operation.

3. The workflow execution method according to claim 1, wherein the workflow is a workflow represented by behavior tree logic; and
the deploying the workflow to a runtime of the corresponding workcell, so that the resources in the workcell perform the operations according to the workflow comprises:
providing the workflow represented by the behavior tree logic to the runtime of the corresponding workcell, so that the runtime builds the workflow represented by the behavior tree logic into a binary executable file, and executes the binary executable file to schedule a corresponding resource to perform a corresponding service operation.

4. A workflow execution method, comprising:
receiving, by a runtime, a workflow representing service operations to be performed by resources in a workcell, wherein the workflow is obtained by analyzing a behavior tree comprising function block nodes and connection relationships thereof; and
converting, by the runtime, the workflow into an executable format file, and executing the executable format file to schedule a corresponding resource to perform a corresponding service operation.

5. The workflow execution method according to claim 4, wherein the workflow is a workflow in a markup language format; and
the converting, by the runtime, the workflow into an executable format file, and executing the executable format file to schedule a corresponding resource to perform a corresponding service operation comprises:
converting, by the runtime, the workflow in the markup language format into a workflow in a node link assembly format, executing the workflow in the node link assembly format, and selecting an appropriate execution engine for the function block nodes in the workflow to schedule a corresponding resource to perform a corresponding service operation.

6. The workflow execution method according to claim 4, wherein the workflow is a workflow represented by behavior tree logic; and
the converting, by the runtime, the workflow into an executable format file, and executing the executable format file to schedule a corresponding resource to perform a corresponding service operation comprises:
building, by the runtime, the workflow represented by the behavior tree logic into a binary executable file, and executing the binary executable file to schedule a corresponding resource to perform a corresponding service operation.

7. The workflow execution method according to anyone of claims 4 to 6, further comprising: debugging and monitoring, by the runtime, an execution status when using the execution engine to schedule the corresponding resource to perform the corresponding service operation.

8. The workflow execution method according to any one of claims 4 to 6, wherein the workflow is an OT domain workflow; the workcell is a workcell in an OT domain; and the resource is an OT resource.

9. The workflow execution method according to claim 8, further comprising: triggering, when an IT device calls a microservice corresponding to the behavior tree, the runtime to execute the OT domain workflow.

10. The workflow execution method according to any one of claims 4 to 6, further comprising: integrating, by the runtime, skills of an open-source community into the runtime.

11. The workflow execution method according to any one of claims 4 to 6, wherein the runtime is deployed to a single-board machine or an industrial personal computer for execution.

12. A workflow execution system, comprising:
an analysis module (141), configured to analyze a behavior tree, to obtain a workflow representing service operations to be performed by resources in a workcell, wherein the function block nodes are configured to implement the service operations in the workflow; and
a deployment module (142), configured to deploy a workflow to a runtime (30) of the corresponding workcell, so that the resources in the workcell perform the service operations according to the workflow.

13. A workflow execution system, comprising:
a runtime (30), configured to receive a workflow representing service operations to be performed by resources in a workcell, convert the workflow into an executable format file, and execute the executable format file to schedule a corresponding resource to perform a corresponding service operation, wherein the workflow is obtained by analyzing a behavior tree comprising function block nodes and connection relationships thereof.

14. The workflow execution system according to claim 13, wherein the runtime (30) comprises:
a format conversion module (311), configured to receive a workflow that is in a markup language format and that represents service operations to be performed by resources in a workcell, and convert the workflow into a workflow in a node link assembly format;
a first executor (322), configured to execute the workflow in the node link assembly format, and provide the function block nodes in the workflow to an execution engine module (33); and
the execution engine module (33), configured to select an appropriate execution engine for the function block nodes to schedule a corresponding resource to perform a corresponding service operation.

15. The workflow execution system according to claim 13, wherein the runtime (30) comprises: a builder (321), configured to build a workflow represented by behavior tree logic into a binary executable file; and
a second executor (312), configured to execute the binary executable file to schedule a corresponding resource to perform a corresponding service operation.

16. A workflow execution system, comprising:
at least one memory (51), configured to store computer-readable code; and
at least one processor (52), configured to invoke the computer-readable code, to perform the steps of the workflow execution method according to any one of claims 1 to 11.

17. An IT domain and OT domain convergence system, comprising:
an IT device; and
the workflow execution system according to any one of claims 12 to 16, wherein the workflow is an OT domain workflow; the workcell is a workcell in an OT domain; and the resource is an OT resource; and the workflow execution system further comprises: an OT domain microservice interface (38), configured to: when the IT device calls a microservice corresponding to the workflow, trigger the workflow execution system to execute the OT domain workflow.

18. A computer-readable medium, wherein the computer-readable medium stores computer instructions, and the computer instructions, when executed by a processor, perform the steps of the workflow execution method according to any one of claims 1 to 11.

19. A computer program product, wherein the computer program product is tangibly stored in a computer-readable medium and comprises computer-executable instructions, and the computer-executable instructions, when executed, enable at least one processor to perform the steps of the workflow execution method according to any one of claims 1 to 11.
